# EUROPÄISCHE PATENTSCHRIFT

(11) **EP 3 818 824 B1**
(45) Veröffentlichungstag und Bekanntmachung des Hinweises auf die Patenterteilung: **22.01.2025**
(21) Anmeldenummer: 20401056.5
(22) Anmeldetag: 02.11.2020
(51) Int. Cl.: A01M 7/00

(54) **VERFAHREN ZUM BETREIBEN EINES LANDWIRTSCHAFTLICHEN SPRITZGERÄTS**
METHOD FOR OPERATING AN AGRICULTURAL DISPERSION DEVICE
PROCÉDÉ DE FONCTIONNEMENT D'UN PULVÉRISATEUR AGRICOLE

(30) Priorität: 08.11.2019 DE 102019130126
(43) Veröffentlichungstag der Anmeldung: 12.05.2021
(73) Patentinhaber: Amazonen-Werke H. Dreyer SE & Co. KG, 49205 Hasbergen (DE)
(72) Erfinder: große Prues, Frank, 49593 Bersenbrück (DE); Heer, Jochen, 49074 Osnabrück (DE); Lampe, Toivo, 49080 Osnabrück (DE)

(56) Entgegenhaltungen:
- EP-A1- 3 167 712
- EP-A1- 3 235 380
- EP-A1- 3 269 241
- WO-A1-2019/091858
- DE-A1- 102017 126 350

## Beschreibung

Die Erfindung betrifft ein Verfahren zum Betreiben eines landwirtschaftlichen Spritzgeräts nach dem Oberbegriff des Patentanspruchs 1 und ein landwirtschaftliches Spritzgerät nach dem Oberbegriff des Patentanspruchs 9.

Zum Ausbringen von Spritzflüssigkeit auf eine landwirtschaftliche Nutzfläche werden vermehrt landwirtschaftliche Spritzgeräte eingesetzt, welche über ein Direkteinspeisesystem verfügen. Mittels des Direkteinspeisesystems kann die auszubringende Spritzflüssigkeit geräteintern hergestellt werden, wobei zur geräteinternen Herstellung der auszubringenden Spritzflüssigkeit ein Wirkstoff in eine Trägerflüssigkeit eingespeist wird. Die geräteintern hergestellte Spritzflüssigkeit wird dann den Ausbringdüsen des Spritzgeräts zugeleitet, über welche die Spritzflüssigkeit dann auf eine landwirtschaftliche Nutzfläche abgegeben werden kann.

Landwirtschaftliche Spritzgeräte mit einem Direkteinspeisesystem sind beispielsweise aus den Druckschriften EP 3 348 142 A1, DE 10 2017 126 350 A1, EP 3 167 712 A1 und EP 3 269 241 A1 bekannt.

Entsprechende Direkteinspeisesysteme werden häufig in Verbindung mit einem konventionellen Brühekreislauf eingesetzt. Derartige Brühekreisläufe sind beispielsweise aus den Druckschriften DE 10 2007 012 796 A1, DE 10 2011 050 207 A1 und EP 3 235 380 A1 bekannt.

Bei landwirtschaftlichen Spritzgeräten, deren Brühekreislauf mit einer Wirkstoff-Direkteinspeisung kombiniert wird, besteht das Problem, dass nach dem Beginn der Wirkstoffeinspeisung über das Direkteinspeisesystem eine gewisse Förderzeit zu berücksichtigen ist, bevor die geräteintern hergestellte Spritzflüssigkeit an sämtlichen Spritzdüsen des landwirtschaftlichen Spritzgeräts anliegt. Beim erstmaligen Aufbau der beabsichtigten Wirkstoffkonzentration unter Verwendung des Direkteinspeisesystems kommt es somit zu einer zeitlichen Verzögerung bei der Bereitstellung der beabsichtigten Wirkstoffkonzentration an den Spritzdüsen des landwirtschaftlichen Spritzgeräts.

Wenn die Trägerflüssigkeit, in welche mittels des Direkteinspeisesystems ein Wirkstoff eingespeist wird, eine bereits vorgemischte Spritzbrühe ist, besteht außerdem das Problem, dass das landwirtschaftliche Spritzgerät bei der Aktivierung des Direkteinspeisesystems zu bewegen ist, um eine lokale übermäßige Ausbringung der vorgemischten Spritzbrühe zu verhindern. Eine entsprechende lokale übermäßige Ausbringung der Spritzbrühe würde sich ergeben, da die in dem Leitungssystem des landwirtschaftlichen Spritzgeräts zwischen der Einspeisestelle und den Spritzdüsen befindliche Spritzbrühe auszubringen ist, während die geräteintern hergestellte Spritzflüssigkeit zu den Spritzdüsen geleitet wird.

Die der Erfindung zugrundeliegende Aufgabe besteht somit darin, den erstmaligen Aufbau einer beabsichtigten Wirkstoffkonzentration unter Verwendung eines Direkteinspeisesystems zu verbessern.

Die Aufgabe wird gelöst durch ein Verfahren der eingangs genannten Art, wobei im Rahmen des erfindungsgemäßen Verfahrens eine Steuerungseinrichtung des landwirtschaftlichen Spritzgeräts veranlasst, dass sich die Ausbringelemente des landwirtschaftlichen Spritzgeräts bei Beginn einer Wirkstoffeinspeisung in die Trägerflüssigkeit zunächst in einem geschlossenen Zustand befinden, zumindest bis die geräteintern hergestellte Spritzflüssigkeit an den Ausbringelementen anliegt.

Dadurch, dass sich die Ausbringelemente bei Beginn einer Wirkstoffeinspeisung in die Trägerflüssigkeit zunächst in einem geschlossenen Zustand befinden, wird vermieden, dass die sich zwischen der Einspeisestelle und den Ausbringelementen vorhandene Trägerflüssigkeit während des Förderns der geräteintern hergestellten Spritzflüssigkeit zu den Ausbringelementen abgegeben wird. Eine bei Beginn der Wirkstoffeinspeisung zwischen der Einspeisestelle und den Ausbringelementen vorhandene Trägerflüssigkeit wird somit vollständig durch die geräteintern hergestellte Spritzflüssigkeit ausgetauscht, ohne dass hierzu die Ausbringelemente des landwirtschaftlichen Spritzgeräts zu öffnen sind. Der erstmalige Wirkstoff-Konzentrationsaufbau kann somit erfolgen, ohne dass die in den Leitungen zwischen der Einspeisestelle und den Ausbringelementen vorhandene Restmenge an Trägerflüssigkeit auf die landwirtschaftliche Nutzfläche abgegeben werden muss.

Wenn die Trägerflüssigkeit eine bereits vorgemischte Spritzbrühe ist, ist es somit auch nicht länger erforderlich, dass das landwirtschaftliche Spritzgerät während des Förderns der geräteintern hergestellten Spritzflüssigkeit zu den Ausbringelementen bewegt wird, um eine lokal übermäßige Ausbringung der vorgemischten Spritzbrühe auf die landwirtschaftliche Nutzfläche zu vermeiden. Wenn die geräteintern hergestellte Spritzflüssigkeit an den Ausbringelementen anliegt, veranlasst die Steuerungseinrichtung vorzugsweise das Öffnen einzelner oder sämtlicher Ausbringelemente zum Ausbringen der geräteintern hergestellten Spritzflüssigkeit.

Das Herstellen der auszubringenden Spritzflüssigkeit erfolgt im Rahmen des erfindungsgemäßen Verfahrens mittels des Direkteinspeisesystems des landwirtschaftlichen Spritzgeräts. Die Ausbringelemente sind vorzugsweise als Spritzdüsen ausgebildet. Die Ausbringelemente können über interne oder vorgeschaltete Ventile oder andere Absperreinrichtungen zwischen einem geschlossenen Zustand und einem geöffneten Zustand geschaltet werden. Der Wirkstoff wird vorzugsweise mittels einer Einspeisepumpe des Direkteinspeisesystems zur Einspeisestelle gefördert. Der Wirkstoff kann in flüssiger Form vorliegen, beispielsweise als flüssiges Wirkstoffkonzentrat. Der Wirkstoff kann hochkonzentriertes Pflanzenschutzmittel sein. Die Trägerflüssigkeit kann Wasser oder eine vorgemischte Spritzbrühe sein.

In dem erfindungsgemäßen Verfahren wird die geräteintern hergestellte Spritzflüssigkeit über zumindest eine zwischen der Einspeisestelle und den Ausbringelementen verlaufende Ausbringleitung zu den Ausbringelementen gefördert. Die zumindest eine Ausbringleitung verläuft vorzugsweise entlang eines Spritzgestänges des landwirtschaftlichen Spritzgeräts. Die Ausbringelemente sind vorzugsweise an dem Spritzgestänge des landwirtschaftlichen Spritzgeräts angeordnet. Bei Beginn der Wirkstoffeinspeisung in die Trägerflüssigkeit ist in der Ausbringleitung Trägerflüssigkeit vorhanden. Die Trägerflüssigkeit in der zumindest einen Ausbringleitung zwischen der Einspeisestelle und den Ausbringelementen wird während des Förderns der mittels des Direkteinspeisesystems geräteintern hergestellten Spritzflüssigkeit zu den Ausbringelementen durch das Leitungssystem des landwirtschaftlichen Spritzgeräts abtransportiert, vorzugsweise in Richtung eines Vorratsbehälters für die Trägerflüssigkeit. Der Vorratsbehälter für die Trägerflüssigkeit ist vorzugsweise Bestandteil des landwirtschaftlichen Spritzgeräts.

In einer anderen bevorzugten Ausführungsform des erfindungsgemäßen Verfahrens wird den Ausbringelementen vor dem Beginn der Wirkstoffeinspeisung in die Trägerflüssigkeit über ein Umlaufsystem des landwirtschaftlichen Spritzgeräts Trägerflüssigkeit zugeführt. Das Umlaufsystem umfasst einen Flüssigkeitskreislauf, innerhalb welchem die Trägerflüssigkeit zirkulieren kann. Das landwirtschaftliche Spritzgerät kann in einem Umlaufmodus und in einem Direkteinspeisemodus betrieben werden. In dem Umlaufmodus zirkuliert die Trägerflüssigkeit in dem Flüssigkeitskreislauf des Umlaufssystems. Die Ausbringelemente sind mit dem Flüssigkeitskreislauf verbunden, sodass die Trägerflüssigkeit im Umlaufmodus über die Ausbringelemente ausgebracht werden kann. Im Direkteinspeisemodus erfolgt eine Wirkstoffeinspeisung unter Verwendung des Direkteinspeisesystems des landwirtschaftlichen Spritzgeräts. Das landwirtschaftliche Spritzgerät erlaubt eine Umschaltung zwischen dem Umlaufmodus und dem Direkteinspeisemodus. Im Umlaufmodus erfolgt auch bei geschlossenen Ausbringelementen vorzugsweise eine kontinuierliche Zirkulation der Trägerflüssigkeit vor den Ausbringelementen.

Im erfindungsgemäßen Verfahren wird die bei Beginn der Wirkstoffeinspeisung in die Trägerflüssigkeit in der Ausbringleitung vorhandene Trägerflüssigkeit über eine Rückführleitung zumindest teilweise zurück in einen Vorratsbehälter für die Trägerflüssigkeit geleitet, währenddessen die geräteintern hergestellte Spritzflüssigkeit zu den Ausbringelementen gefördert wird. Da die Ausbringelemente während des Förderns der geräteintern hergestellten Spritzflüssigkeit zu den Ausbringelementen geschlossen bzw. gesperrt sind, ist ein geräteinterner Abtransport der Trägerflüssigkeit, welche sich in der zumindest einen Ausbringleitung zwischen der Einspeisestelle und den Ausbringelementen befindet, erforderlich. Über die Rückführleitung kann die Trägerflüssigkeit zumindest teilweise zurück in den Vorratsbehälter für die Trägerflüssigkeit geleitet werden. Hierbei ist darauf zu achten, dass der über das Direkteinspeisesystem eingespeiste Wirkstoff nicht in den Vorratsbehälter für die Trägerflüssigkeit gelangt, da es sonst zu einer Kontamination der Trägerflüssigkeit in dem Vorratsbehälter kommt.

In einer Weiterbildung des erfindungsgemäßen Verfahrens wird ein Zurückleiten der bei Beginn der Wirkstoffeinspeisung in die Trägerflüssigkeit in der Ausbringleitung vorhandenen Trägerflüssigkeit in den Vorratsbehälter für die Trägerflüssigkeit unterbrochen, wenn eine vorgegebene Menge an geräteintern hergestellter Spritzflüssigkeit zu den Ausbringelementen gefördert wurde. Die vorgegebene Menge an geräteintern hergestellter Spritzflüssigkeit entspricht beispielsweise dem Leitungsvolumen der zumindest einen Ausbringleitung zwischen der Einspeisestelle und den Ausbringelementen. Wenn die vorgegebene Menge an geräteintern hergestellter Spritzflüssigkeit zu den Ausbringelementen gefördert wurde, ist es zu einem vollständigen Austausch der Trägerflüssigkeit in der zumindest einen Ausbringleitung zwischen der Einspeisestelle und den Ausbringelementen durch die geräteintern hergestellte Spritzflüssigkeit gekommen. Das Unterbrechen des Zurückleitens der Trägerflüssigkeit in den Vorratsbehälter für die Trägerflüssigkeit erfolgt vorzugsweise mittels eines Ventils, insbesondere eines Rückflussregelventils, in der Rückführleitung. Dadurch, dass das Zurückleiten der bei Beginn der Wirkstoffeinspeisung in der Ausbringleitung vorhandenen Trägerflüssigkeit in den Vorratsbehälter unterbrochen wird, wird eine Kontamination der innerhalb des Vorratsbehälters befindlichen Trägerflüssigkeit durch einen Wirkstoffeintrag des über Direkteinspeisesystem eingespeisten Wirkstoffs vermieden.

Das erfindungsgemäße Verfahren sieht vor, dass die Durchflussmenge an Flüssigkeit durch die Ausbringleitung mittels einer Durchflussmesseinrichtung ab dem Beginn der Wirkstoffeinspeisung in die Trägerflüssigkeit ermittelt wird. Das Zurückleiten der bei Beginn der Wirkstoffeinspeisung in die Trägerflüssigkeit in der Ausbringleitung vorhandenen Trägerflüssigkeit in den Vorratsbehälter für die Trägerflüssigkeit wird vorzugsweise unterbrochen, sobald die ermittelte Durchflussmenge an Flüssigkeit durch die Ausbringleitung einen Grenzwert erreicht oder überschreitet. Die Durchflussmesseinrichtung ist vorzugsweise innerhalb eines Messabschnitts der Ausbringleitung angeordnet. Der Grenzwert entspricht beispielsweise dem Leitungsvolumen der Ausbringleitung zwischen der Einspeisestelle und dem letzten Ausbringelement. Wenn der Grenzwert erreicht oder überschritten wird, ist es zu einem vollständigen Austausch der Trägerflüssigkeit in der Ausbringleitung zwischen der Einspeisestelle und den Ausbringelementen durch die geräteintern hergestellte Spritzflüssigkeit gekommen. Das Unterbrechen des Zurückführens der Trägerflüssigkeit in den Vorratsbehälter für die Trägerflüssigkeit erfolgt vorzugsweise mittels eines Ventils, insbesondere eines Rückflussregelventils, in der Rückführleitung.

Das erfindungsgemäße Verfahren sieht alternativ oder zusätzlich vor, dass die Durchflussmenge an Flüssigkeit durch die Rückführleitung mittels einer Durchflussmesseinrichtung ab dem Beginn der Wirkstoffeinspeisung in die Trägerflüssigkeit ermittelt wird. Das Zurückleiten der bei Beginn der Wirkstoffeinspeisung in die Trägerflüssigkeit in der Ausbringleitung vorhandenen Trägerflüssigkeit in den Wirkstoffbehälter für die Trägerflüssigkeit wird vorzugsweise unterbrochen, sobald die ermittelte Durchflussmenge an Flüssigkeit durch die Rückführleitung einen Grenzwert erreicht oder überschreitet. Die Durchflussmesseinrichtung ist vorzugsweise innerhalb eines Messabschnitts der Rückführleitung angeordnet. Der Grenzwert entspricht beispielsweise dem Leitungsvolumen der Ausbringleitung zwischen der Einspeisestelle und dem letzten Ausbringelement. Wenn der Grenzwert erreicht oder überschritten wird, ist es zu einem vollständigen Austausch der Trägerflüssigkeit in der Ausbringleitung zwischen der Einspeisestelle und den Ausbringelementen durch die geräteintern hergestellte Spritzflüssigkeit gekommen. Das Unterbrechen des Zurückleitens der Trägerflüssigkeit in einen Vorratsbehälter für die Trägerflüssigkeit erfolgt vorzugsweise mittels eines Ventils, insbesondere eines Rückflussregelventils, in der Rückführleitung. Wenn das landwirtschaftliche Spritzgerät im Umlaufmodus betrieben wird, das heißt ohne Verwendung des Direkteinspeisesystems, kann der Differenzwert zwischen den Durchflussmesseinrichtungen in der Ausbringleitung und der Rückführleitung als Wert für die aktuelle Ausbringmenge verwendet werden. Somit können die Durchflussmesseinrichtungen nicht nur zur Vermeidung der Kontamination während des Konzentrationsaufbaus zu Beginn einer Wirkstoffeinspeisung verwendet werden, sondern können auch im Umlaufmodus des landwirtschaftlichen Spritzgeräts zur Umsetzung einer Gerätefunktion genutzt werden.

In einer anderen Ausführungsform des erfindungsgemäßen Verfahrens wird eine überschüssige Menge an geförderter Trägerflüssigkeit vor dem Erreichen der Einspeisestelle des Wirkstoffs über eine Abführleitung zurück in den Vorratsbehälter für die Trägerflüssigkeit geleitet, wenn das Zurückleiten der bei Beginn der Wirkstoffeinspeisung in die Trägerflüssigkeit in der Ausbringleitung vorhandenen Trägerflüssigkeit in einen Vorratsbehälter für die Trägerflüssigkeit unterbrochen ist. Zwischen dem Vorratsbehälter für die Trägerflüssigkeit und der Einspeisestelle befindet sich vorzugsweise ein Bypass-Ventil, über welches zumindest ein Teil der Trägerflüssigkeit in die Abführleitung einleitbar ist. Das Bypass-Ventil kann als Mengenregelventil ausgebildet sein, über welches die der Einspeisestelle zugeleitete Durchflussmenge an Trägerflüssigkeit einstellbar ist. Zwischen dem Vorratsbehälter für die Trägerflüssigkeit und der Einspeisestelle befindet sich vorzugsweise eine Förderpumpe zum Fördern der Trägerflüssigkeit zu der Einspeisestelle und den Ausbringelementen. Zwischen dem Vorratsbehälter für die Trägerflüssigkeit und der Einspeisestelle befindet sich vorzugsweise ein Druckbegrenzungsventil.

Die der Erfindung zugrundeliegende Aufgabe wird ferner durch ein landwirtschaftliches Spritzgerät der eingangs genannten Art gelöst, wobei das erfindungsgemäße Spritzgerät eine Steuerungseinrichtung aufweist, welche dazu eingerichtet ist, zu veranlassen, dass sich die Ausbringelemente bei Beginn einer Wirkstoffeinspeisung in die Trägerflüssigkeit zunächst in einem geschlossenen Zustand befinden, zumindest bis die geräteintern hergestellte Spritzflüssigkeit an den Ausbringelementen anliegt. Das landwirtschaftliche Spritzgerät ist vorzugsweise eine Feldspritze. Die Ausbringelemente des landwirtschaftlichen Spritzgeräts sind vorzugsweise Spritzdüsen.

In einer bevorzugten Ausführungsform des erfindungsgemäßen landwirtschaftlichen Spritzgeräts sind die Einspeisestelle und die Ausbringelemente durch zumindest eine Ausbringleitung fluidleitend verbunden, über welche die geräteintern hergestellte Spritzflüssigkeit zu den Ausbringelementen förderbar ist. Das landwirtschaftliche Spritzgerät weist vorzugsweise ein Spritzgestänge auf, wobei sich die zumindest eine Ausbringleitung an dem Spritzgestänge befindet. Insbesondere sind die Ausbringelemente ebenfalls an dem Spritzgestände angeordnet. Bei Beginn der Wirkstoffeinspeisung in die Trägerflüssigkeit ist in der Ausbringleitung vorzugsweise noch abzuführende Trägerflüssigkeit vorhanden.

Das erfindungsgemäße landwirtschaftliche Spritzgerät wird ferner durch ein Umlaufsystem weitergebildet, welches einen mit den Ausbringelementen fluidleitend verbundenen Flüssigkeitskreislauf aufweist, wobei der Flüssigkeitskreislauf eine Zirkulation der Trägerflüssigkeit ermöglicht. Den Ausbringelementen wird vor dem Beginn der Wirkstoffeinspeisung in die Trägerflüssigkeit vorzugsweise über das Umlaufsystem Trägerflüssigkeit zugeführt.

Das erfindungsgemäße landwirtschaftliche Spritzgerät wird ferner dadurch vorteilhaft weitergebildet, dass die Ausbringelemente über eine Rückführleitung fluidleitend mit einem Vorratsbehälter für die Trägerflüssigkeit verbunden sind. Die Steuerungseinrichtung ist dazu eingerichtet, zu veranlassen, dass die bei Beginn der Wirkstoffeinspeisung in die Trägerflüssigkeit in der Ausbringleitung vorhandene Trägerflüssigkeit zumindest teilweise über die Rückführleitung zurück in einen Vorratsbehälter für die Trägerflüssigkeit geleitet wird. Der Vorratsbehälter für die Trägerflüssigkeit ist vorzugsweise ein großvolumiger Flüssigkeitstank. Das Direkteinspeisesystem kann einen Wirkstofftank für den einzuspeisenden Wirkstoff umfassen. Alternativ oder zusätzlich kann das Direkteinspeisesystem des landwirtschaftlichen Spritzgeräts eine Aufnahme- und Arretiervorrichtung für einen Wirkstoff-Vorratsbehälter umfassen. Die Aufnahme- und Arretiervorrichtung kann Bestandteil eines Closed-Transfer-Systems (CTS) sein.

In einer vorteilhaften Weiterbildung des erfindungsgemäßen landwirtschaftlichen Spritzgeräts ist die Steuerungseinrichtung dazu eingerichtet, ein Zurückleiten der bei Beginn der Wirkstoffeinspeisung in die Trägerflüssigkeit in der Ausbringleitung vorhandenen Trägerflüssigkeit in den Vorratsbehälter für die Trägerflüssigkeit zu unterbrechen, wenn eine vorgegebene Menge an geräteintern hergestellter Spritzflüssigkeit zu den Ausbringelementen gefördert wurde. Das Unterbrechen des Zurückleitens der Trägerflüssigkeit in den Vorratsbehälter kann beispielsweise über das Schließen einer Sperreinrichtung, insbesondere eines Ventils, oder über das Deaktivieren einer Förderpumpe erfolgen. Beispielsweise wird die Förderpumpe des Umlaufsystems des landwirtschaftlichen Spritzgeräts deaktiviert, um das Zurückleiten der Trägerflüssigkeit in den Vorratsbehälter zu unterbrechen.

In der erfindungsgemäßen Ausführungsform weist das erfindungsgemäße landwirtschaftliche Spritzgerät eine Durchflussmesseinrichtung auf, welche dazu eingerichtet ist, die Durchflussmenge an Flüssigkeit durch die Ausbringleitung ab dem Beginn der Wirkstoffeinspeisung in die Trägerflüssigkeit zu ermitteln. Alternativ oder zusätzlich weist das landwirtschaftliche Spritzgerät eine Durchflussmesseinrichtung auf, welche dazu eingerichtet ist, die Durchflussmenge an Flüssigkeit durch die Rückführleitung ab dem Beginn der Wirkstoffeinspeisung in die Trägerflüssigkeit zu ermitteln. Erfindungsgemäß ist die Steuerungseinrichtung dazu eingerichtet, das Zurückleiten der bei Beginn der Wirkstoffeinspeisung in die Trägerflüssigkeit in der Ausbringleitung vorhandenen Trägerflüssigkeit in den Vorratsbehälter für die Trägerflüssigkeit zu unterbrechen, sobald die ermittelte Durchflussmenge an Flüssigkeit durch die Ausbringleitung und/oder die Rückführleitung einen Grenzwert erreicht oder überschreitet.

Es ist ferner ein erfindungsgemäßes landwirtschaftliches Spritzgerät bevorzugt, welches eine Abführleitung aufweist, mittels welcher eine überschüssige Menge an geförderter Trägerflüssigkeit vor dem Erreichen der Einspeisestelle des Wirkstoffs zurück in den Vorratsbehälter für die Trägerflüssigkeit leitbar ist. Zwischen dem Vorratsbehälter für die Trägerflüssigkeit und der Einspeisestelle befindet sich vorzugsweise ein Bypass-Ventil, über welches zumindest ein Teil der Trägerflüssigkeit in die Abführleitung einleitbar ist. Das Bypass-Ventil kann als Mengenregelventil ausgebildet sein, über welches die der Einspeisestelle zurückgeleitete Durchflussmenge an Trägerflüssigkeit einstellbar ist. Zwischen dem Vorratsbehälter für die Trägerflüssigkeit und der Einspeisestelle befindet sich vorzugsweise eine Förderpumpe zum Fördern der Trägerflüssigkeit zu der Einspeisestelle und den Ausbringelementen. Zwischen dem Vorratsbehälter für die Trägerflüssigkeit und der Einspeisestelle befindet sich vorzugsweise ein Druckbegrenzungsventil.

Das landwirtschaftliche Spritzgerät ist vorzugsweise dazu eingerichtet, mittels eines Verfahrens nach einer der vorstehend beschriebenen Ausführungsformen betrieben zu werden. Hinsichtlich weiterer Vorteile und Modifikationen des erfindungsgemäßen landwirtschaftlichen Spritzgeräts wird somit auf die Vorteile und Modifikationen des erfindungsgemäßen Verfahrens verwiesen.

Nachfolgend wird eine bevorzugte Ausführungsform der Erfindung unter Bezugnahme auf die beiliegende Zeichnung näher erläutert und beschrieben. Dabei zeigt:

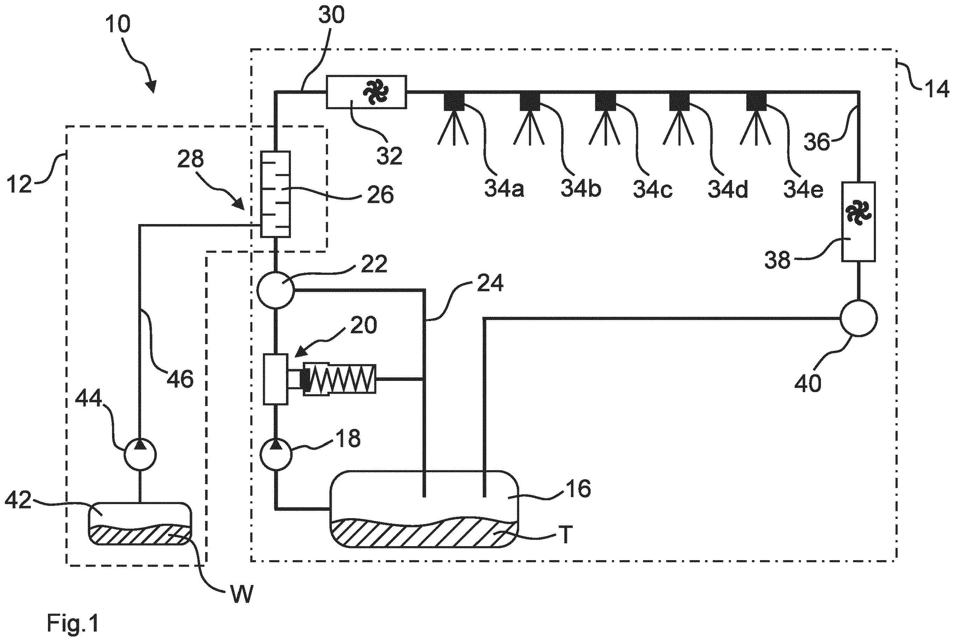

- Fig. 1: eine Ausbringeinrichtung eines erfindungsgemäßen landwirtschaftlichen Spritzgeräts in einer schematischen Darstellung.

Die Fig. 1 zeigt eine Ausbringeinrichtung 10 eines landwirtschaftlichen Spritzgeräts. Das landwirtschaftliche Spritzgerät ist in diesem Fall eine Feldspritze.

Die Ausbringeinrichtung 10 umfasst ein Direkteinspeisesystem 12 und ein Umlaufsystem 14. Das Direkteinspeisesystem 12 dient zum geräteinternen Herstellen einer auszubringenden Spritzflüssigkeit durch Einspeisen eines Wirkstoffs W in eine Trägerflüssigkeit T. Das Umlaufsystem 14 weist einen Flüssigkeitskreislauf auf, innerhalb welchem die Trägerflüssigkeit T zirkulieren kann. Der Flüssigkeitskreislauf ist mit Ausbringelementen 34a-34e verbunden, wobei die Ausbringelemente 34a-34e als Spritzdüsen ausgebildet sind.

Das Umlaufsystem 14 weist einen Vorratsbehälter 16 für die Trägerflüssigkeit T auf. Zwischen dem Vorratsbehälter 16 für die Trägerflüssigkeit T und den Ausbringelementen 34a-34e befindet sich eine Förderpumpe 18 zum Fördern der Trägerflüssigkeit T zu den Ausbringelementen 34a-34e. Ferner umfasst das Umlaufsystem 14 ein Druckbegrenzungsventil 20 und ein Bypass-Ventil 22. Über das Bypass-Ventil 22 kann Trägerflüssigkeit T in eine Abführleitung 24 umgeleitet werden, um die umgeleitete Trägerflüssigkeit T zurück in den Vorratsbehälter 16 für die Trägerflüssigkeit T zu leiten. Das Bypass-Ventil 22 ist ein Mengenregelventil, über welches die den Ausbringelementen 34a-34e zugeleitete Durchflussmenge an Trägerflüssigkeit T einstellbar ist.

In Strömungsrichtung hinter dem Bypass-Ventil 22 befindet sich eine Mischkammer 26, wobei die Mischkammer 26 die Einspeisestelle 28 umfasst, an welcher Wirkstoff W durch das Direkteinspeisesystem 12 in die Trägerflüssigkeit T eingespeist wird. Innerhalb der Mischkammer 26 erfolgt im Direkteinspeisemodus des landwirtschaftlichen Spritzgeräts eine Vermischung der Trägerflüssigkeit T und des Wirkstoffs W. Wenn sich das landwirtschaftliche Spritzgerät im Umlaufmodus befindet, wird die Trägerflüssigkeit T durch die Mischkammer 26 hindurchgeleitet, ohne dass eine Vermischung mit einem Wirkstoff W erfolgt.

Die Mischkammer 26 bzw. die Einspeisestelle 28 sind über eine Ausbringleitung 30 mit den Ausbringelementen 34a-34e verbunden. Die Ausbringeinrichtung 10 umfasst ferner eine Durchflussmesseinrichtung 32, welche dazu eingerichtet ist, die Durchflussmenge an Flüssigkeit durch die Ausbringleitung 30 zu ermitteln. In Strömungsrichtung hinter den Ausbringelementen 34a-34e befindet sich eine weitere Durchflussmesseinrichtung 38. Die Durchflussmesseinrichtung 38 ist in einer Rückführleitung 36 angeordnet, welche die Ausbringelemente 34a-34e fluidleitend mit dem Vorratsbehälter 16 für die Trägerflüssigkeit T verbindet. Die Durchflussmesseinrichtung 38 ist dazu eingerichtet, die Durchflussmenge an Flüssigkeit durch die Rückführleitung 36 zu ermitteln.

Zwischen der Durchflussmesseinrichtung 38 und dem Vorratsbehälter 16 für die Trägerflüssigkeit T ist ein Rückflussregelventil 40 angeordnet. Mittels des Rückflussregelventils 40 lässt sich die über die Rückführleitung 36 in den Vorratsbehälter 16 für die Trägerflüssigkeit T zurückgeführte Menge an Flüssigkeit einstellen. Mittels des Rückflussregelventils 40 kann die Rückführleitung 36 auch vollständig gesperrt werden.

An Hand der Differenz der gemessenen Durchflussmengen der Durchflussmesseinrichtung 32 und der Durchflussmesseinrichtung 38 kann die über die Ausbringelemente 34a-34e ausgebrachte Flüssigkeitsmenge ermittelt werden.

Das Direkteinspeisesystem 12 umfasst einen Wirkstofftank 42, in welchem der Wirkstoff W bevorratet wird. Der Wirkstoff W kann mittels einer Einspeisepumpe 44 des Direkteinspeisesystems 12 über eine Einspeiseleitung 46 zu der Einspeisestelle 28 gefördert werden. Der Wirkstoff W liegt in flüssiger Form vor, vorliegend als flüssiges Wirkstoffkonzentrat. In der dargestellten Ausführungsform ist der Wirkstoff W hochkonzentriertes Pflanzenschutzmittel. Die Trägerflüssigkeit T kann Wasser oder eine vorgemischte Spritzbrühe sein.

Ferner umfasst die Ausbringeinrichtung 10 eine nicht-dargestellte Steuerungseinrichtung, welche veranlasst, dass sich die Ausbringelemente 34a-34e bei Beginn einer Wirkstoffeinspeisung in die Trägerflüssigkeit T zunächst in einem geschlossenen Zustand befinden. Der geschlossene Zustand an den Ausbringelementen 34a-34e wird aufrechterhalten, bis die geräteintern hergestellte Spritzflüssigkeit aus Trägerflüssigkeit T und Wirkstoff W an den Ausbringelementen 34a-34e anliegt. Üblicherweise ist bei Beginn der Wirkstoffeinspeisung in die Trägerflüssigkeit T in der Ausbringleitung 30 zwischen der Einspeisestelle 28 und den Ausbringelementen 34a-34e Trägerflüssigkeit T vorhanden. Die in der Ausbringleitung 30 befindliche Trägerflüssigkeit T wird bei geschlossenen Ausbringelementen 34a-34e in Richtung des Vorratsbehälters 16 für die Trägerflüssigkeit gefördert. Da die Ausbringelemente 34a-34e geschlossen bleiben, bis die geräteintern hergestellte Spritzflüssigkeit an den Ausbringelementen 34a-34e anliegt, wird ein Ausbringen der Trägerflüssigkeit während des Aufbaus der beabsichtigten Wirkstoffkonzentration in der Ausbringleitung 30 vermieden. Die bei Beginn der Wirkstoffeinspeisung in die Trägerflüssigkeit T in der Ausbringleitung 30 vorhandene Trägerflüssigkeit T wird über die Rückführleitung 36 zumindest teilweise zurück in den Vorratsbehälter 16 für die Trägerflüssigkeit T geleitet, währenddessen die geräteintern hergestellte Spritzflüssigkeit zu den Ausbringelementen 34a-34e gefördert wird.

Um eine Kontamination der Trägerflüssigkeit T in dem Vorratsbehälter 16 durch den Wirkstoff W zu vermeiden, wird ein Zurückleiten der in der Ausbringleitung 30 vorhandenen Trägerflüssigkeit in den Vorratsbehälter 16 unterbrochen, wenn eine vorgegebene Menge an geräteintern hergestellter Spritzflüssigkeit zu den Ausbringelementen 34a-34e gefördert wurde. Die vorgegebene Menge an geräteintern hergestellter Spritzflüssigkeit entspricht dabei dem Leitungsvolumen der Ausbringleitung 30 zwischen der Einspeisestelle 28 und dem letzten Ausbringelement 34e. Die zu den Ausbringelementen 34a-34e geförderte Menge an geräteintern hergestellter Spritzflüssigkeit kann mittels der Durchflussmesseinrichtung 32 ermittelt werden. Das Zurückleiten der in der Ausbringleitung 30 vorhandenen Trägerflüssigkeit T in den Vorratsbehälter 16 wird in diesem Fall unterbrochen, sobald eine ermittelte Durchflussmenge an Flüssigkeit durch die Ausbringleitung 30 einen Grenzwert erreicht oder überschreitet.

Alternativ oder zusätzlich kann das Zurückleiten der in der Ausbringleitung 30 vorhandenen Trägerflüssigkeit T in den Vorratsbehälter 16 unterbrochen werden, wenn eine vorgegebene Menge an Flüssigkeit über die Rückführleitung 36 in den Vorratsbehälter 16 für die Trägerflüssigkeit T zurückgeleitet wurde. Die Menge der über die Rückführleitung 36 in den Vorratsbehälter 16 für die Trägerflüssigkeit T zurückgeleiteten Flüssigkeit kann mittels der Durchflussmesseinrichtung 38 ermittelt werden. das Zurückleiten der in der Ausbringleitung 30 vorhandenen Trägerflüssigkeit T in den Vorratsbehälter 16 wird somit unterbrochen, sobald die ermittelte Durchflussmenge an Flüssigkeit durch die Rückführleitung 36 einen Grenzwert erreicht oder überschreitet.

Das Zurückführen von Trägerflüssigkeit T in den Vorratsbehälter 16 für die Trägerflüssigkeit T kann über das Rückflussregelventil 40 unterbrochen werden, indem die Rückführleitung 36 mittels des Rückflussregelventils 40 gesperrt wird.

Eine überschüssige Menge an geförderter Trägerflüssigkeit kann außerdem vor dem Erreichen der Einspeisestelle 28 über die Abführleitung 24 zurück in den Vorratsbehälter 16 geleitet werden, wenn das Zurückleiten der bei Beginn der Wirkstoffeinspeisung in die Trägerflüssigkeit T in der Ausbringleitung 30 vorhandenen Trägerflüssigkeit T in den Vorratsbehälter 16 unterbrochen ist.

### Bezugszeichen

- 10: Ausbringeinrichtung
- 12: Direkteinspeisesystem
- 14: Umlaufsystem
- 16: Vorratsbehälter
- 18: Förderpumpe
- 20: Druckbegrenzungsventil
- 22: Bypass-Ventil
- 24: Abführleitung
- 26: Mischkammer
- 28: Einspeisestelle
- 30: Ausbringleitung
- 32: Durchflussmesseinrichtung
- 34a-34e: Ausbringelemente
- 36: Rückführleitung
- 38: Durchflussmesseinrichtung
- 40: Rückflussregelventil
- 42: Wirkstofftank
- 44: Einspeisepumpe
- 46: Einspeiseleitung

- T: Trägerflüssigkeit
- W: Wirkstoff

## Patentansprüche

1. Verfahren zum Betreiben eines ein Direkteinspeisesystem (12) aufweisenden landwirtschaftlichen Spritzgeräts, mit den Schritten:
- Einspeisen eines Wirkstoffs (W) in eine Trägerflüssigkeit (T) an zumindest einer Einspeisestelle (28) eines Leitungssystems des landwirtschaftlichen Spritzgeräts zum geräteinternen Herstellen einer auszubringenden Spritzflüssigkeit; und
- Fördern der geräteintern hergestellten Spritzflüssigkeit zu mehreren Ausbringelementen (34a-34e) des landwirtschaftlichen Spritzgeräts, mittels welchen die geräteintern hergestellte Spritzflüssigkeit auf eine landwirtschaftliche Nutzfläche ausbringbar ist;
wobei eine Steuerungseinrichtung des landwirtschaftlichen Spritzgeräts veranlasst, dass sich die Ausbringelemente (34a-34e) bei Beginn einer Wirkstoffeinspeisung in die Trägerflüssigkeit (T) zunächst in einem geschlossenen Zustand befinden zumindest bis die geräteintern hergestellte Spritzflüssigkeit an den Ausbringelementen (34a-34e) anliegt und die geräteintern hergestellte Spritzflüssigkeit über zumindest eine zwischen der Einspeisestelle (28) und den Ausbringelementen (34a-34e) verlaufende Ausbringleitung (30) zu den Ausbringelementen (34a-34e) gefördert wird, wobei bei Beginn der Wirkstoffeinspeisung in die Trägerflüssigkeit (T) in der Ausbringleitung (30) Trägerflüssigkeit (T) vorhanden ist, und wobei die bei Beginn der Wirkstoffeinspeisung in die Trägerflüssigkeit (T) in der Ausbringleitung (30) vorhandene Trägerflüssigkeit (T) über eine Rückführleitung (36) zumindest teilweise zurück in einen Vorratsbehälter (16) für die Trägerflüssigkeit (T) geleitet wird,
wobei währenddessen die geräteintern hergestellte Spritzflüssigkeit zu den Ausbringelementen (34a-34e) gefördert wird und
wobei zumindest einen der Schritte:
- Ermitteln der Durchflussmenge an Flüssigkeit durch die Ausbringleitung (30) mittels einer Durchflussmesseinrichtung (32) ab dem Beginn der Wirkstoffeinspeisung in die Trägerflüssigkeit (T); und/oder
- Ermitteln der Durchflussmenge an Flüssigkeit durch die Rückführleitung (36) mittels einer Durchflussmesseinrichtung (38) ab dem Beginn der Wirkstoffeinspeisung in die Trägerflüssigkeit (T);
das Verfahren **dadurch gekennzeichnet, dass** das Zurückleiten der bei Beginn der Wirkstoffeinspeisung in die Trägerflüssigkeit (T) in der Ausbringleitung (30) vorhandenen Trägerflüssigkeit (T) in den Vorratsbehälter (16) für die Trägerflüssigkeit (T) unterbrochen wird, sobald die ermittelte Durchflussmenge an Flüssigkeit durch die Ausbringleitung (30) und/oder die Rückführleitung (36) einen Grenzwert erreicht oder überschreitet.

2. Verfahren nach Anspruch 1,
**dadurch gekennzeichnet, dass** den Ausbringelementen (34a-34e) vor dem Beginn der Wirkstoffeinspeisung in die Trägerflüssigkeit (T) über ein Umlaufsystem (14) des landwirtschaftlichen Spritzgeräts Trägerflüssigkeit (T) zugeführt wird.

3. Verfahren nach einem der vorstehenden Ansprüche,
**dadurch gekennzeichnet, dass** ein Zurückleiten der bei Beginn der Wirkstoffeinspeisung in die Trägerflüssigkeit (T) in der Ausbringleitung (30) vorhandenen Trägerflüssigkeit (T) in den Vorratsbehälter (16) für die Trägerflüssigkeit (T) unterbrochen wird, wenn eine vorgegebene Menge an geräteintern hergestellter Spritzflüssigkeit zu den Ausbringelementen (34a-34e) gefördert wurde.

4. Verfahren nach einem der vorstehenden Ansprüche,
**dadurch gekennzeichnet, dass** eine überschüssige Menge an geförderter Trägerflüssigkeit (T) vor dem Erreichen der Einspeisestelle (28) des Wirkstoffs (W) über eine Abführleitung (24) zurück in den Vorratsbehälter (16) für die Trägerflüssigkeit (T) geleitet wird, wenn das Zurückleiten der bei Beginn der Wirkstoffeinspeisung in die Trägerflüssigkeit (T) in der Ausbringleitung (30) vorhandenen Trägerflüssigkeit (T) in einen Vorratsbehälter (16) für die Trägerflüssigkeit (T) unterbrochen ist.

5. Landwirtschaftliches Spritzgerät, insbesondere Feldspritze, mit
- einem Direkteinspeisesystem (12), mittels welchem an zumindest einer Einspeisestelle (28) eines Leitungssystems des landwirtschaftlichen Spritzgeräts ein Wirkstoff (W) in eine Trägerflüssigkeit (T) zum geräteinternen Herstellen einer auszubringenden Spritzflüssigkeit einspeisbar ist; und
- mehreren Ausbringelementen (34a-34e), mittels welchen die geräteintern hergestellte Spritzflüssigkeit auf eine landwirtschaftliche Nutzfläche ausbringbar ist;
- eine Steuerungseinrichtung, welche dazu eingerichtet ist, zu veranlassen, dass sich die Ausbringelemente (34a-34e) bei Beginn einer Wirkstoffeinspeisung in die Trägerflüssigkeit (T) zunächst in einem geschlossenen Zustand befinden zumindest bis die geräteintern hergestellte Spritzflüssigkeit an den Ausbringelementen (34a-34e) anliegt und die Ausbringelemente (34a-34e) über eine Rückführleitung (36) fluidleitend mit einem Vorratsbehälter (16) für die Trägerflüssigkeit (T) verbunden sind, wobei die Steuerungseinrichtung dazu eingerichtet ist, zu veranlassen, dass die bei Beginn der Wirkstoffeinspeisung in die Trägerflüssigkeit (T) in der Ausbringleitung (30) vorhandene Trägerflüssigkeit (T) zumindest teilweise über die Rückführleitung (36) zurück in einen Vorratsbehälter (16) für die Trägerflüssigkeit (T) geleitet wird
**gekennzeichnet durch**
- eine Durchflussmesseinrichtung (32), welche dazu eingerichtet ist, die Durchflussmenge an Flüssigkeit durch die Ausbringleitung (30) ab dem Beginn der Wirkstoffeinspeisung in die Trägerflüssigkeit (T) zu ermitteln; und/oder
- eine Durchflussmesseinrichtung (38), welche dazu eingerichtet ist, die Durchflussmenge an Flüssigkeit durch die Rückführleitung (36) ab dem Beginn der Wirkstoffeinspeisung in die Trägerflüssigkeit (T) zu ermitteln;
wobei die Steuerungseinrichtung dazu eingerichtet ist, das Zurückleiten der bei Beginn der Wirkstoffeinspeisung in die Trägerflüssigkeit (T) in der Ausbringleitung (30) vorhandenen Trägerflüssigkeit (T) in den Vorratsbehälter (16) für die Trägerflüssigkeit (T) zu unterbrechen, sobald die ermittelte Durchflussmenge an Flüssigkeit durch die Ausbringleitung (30) und/oder die Rückführleitung (36) einen Grenzwert erreicht oder überschreitet.

6. Landwirtschaftliches Spritzgerät nach Anspruch 5,
**dadurch gekennzeichnet, dass** die Einspeisestelle (28) und die Ausbringelemente (34a-34e) durch zumindest eine Ausbringleitung (30) fluidleitend verbunden sind, über welche die geräteintern hergestellte Spritzflüssigkeit zu den Ausbringelementen (34a-34e) förderbar ist.

7. Landwirtschaftliches Spritzgerät nach Anspruch 5 oder 6,
**gekennzeichnet durch** ein Umlaufsystem (14), welches einen mit den Ausbringelementen (34a-34e) fluidleitend verbundenen Flüssigkeitskreislauf aufweist, wobei der Flüssigkeitskreislauf eine Zirkulation der Trägerflüssigkeit (T) ermöglicht.

8. Landwirtschaftliches Spritzgerät nach einem der vorstehenden Ansprüche, **dadurch gekennzeichnet, dass** die Steuerungseinrichtung dazu eingerichtet ist, ein Zurückleiten der bei Beginn der Wirkstoffeinspeisung in die Trägerflüssigkeit (T) in der Ausbringleitung (30) vorhandenen Trägerflüssigkeit (T) in den Vorratsbehälter (16) für die Trägerflüssigkeit (T) zu unterbrechen, wenn eine vorgegebene Menge an geräteintern hergestellter Spritzflüssigkeit zu den Ausbringelementen (34a-34e) gefördert wurde.

9. Landwirtschaftliches Spritzgerät nach einem der Ansprüche 5 bis 8,
**gekennzeichnet durch** eine Abführleitung (24), mittels welcher eine überschüssige Menge an geförderter Trägerflüssigkeit (T) vor dem Erreichen der Einspeisestelle (28) des Wirkstoffs (W) zurück in den Vorratsbehälter (16) für die Trägerflüssigkeit (T) leitbar ist.

## Claims

1. Method for operating an agricultural sprayer apparatus which has a direct infeed system (12), comprising the steps:
- feeding an active substance (W) into a carrier liquid (T) at at least one infeed point (28) of a line system of the agricultural sprayer apparatus in order to produce, inside the apparatus, a spray liquid to be applied; and
- conveying the spray liquid produced in the apparatus to a plurality of application elements (34a-34e) of the agricultural sprayer apparatus, by means of which application elements the spray liquid produced in the apparatus can be applied to an area of agricultural land;
a control device of the agricultural sprayer apparatus causing the application elements (34a-34e) to initially be in a closed state at the start of feeding of the active substance into the carrier liquid (T), at least until the spray liquid produced in the apparatus is in contact with the application elements (34a-34e), and the spray liquid produced in the apparatus being conveyed to the application elements (34a-34e) via at least one application line (30) running between the infeed point (28) and the application elements (34a-34e), carrier liquid (T) being present in the application line (30) at the start of the feeding of the active substance into the carrier liquid (T), and the carrier liquid (T) present in the application line (30) at the start of the feeding of the active substance into the carrier liquid (T) being at least partially routed back into a storage container (16) for the carrier liquid (T) via a return line (36),
in the process the spray liquid produced in the apparatus
being conveyed to the application elements (34a-34e) and at least one of the steps of:
- determining the flow rate of liquid through the application line (30) by means of a flow measuring device (32) from the start of the feeding of the active substance into the carrier liquid (T); and/or
- determining the flow rate of liquid through the return line (36) by means of a flow measuring device (38) from the start of the feeding of the active substance into the carrier liquid (T);
the method **characterized in that**
the routing of the carrier liquid (T), which is present in the application line (30) at the start of the feeding of the active substance into the carrier liquid (T), back into the storage container (16) for the carrier liquid (T) is interrupted as soon as the determined flow rate of liquid through the application line (30) and/or the return line (36) reaches or exceeds a threshold value.

2. Method according to claim 1,
**characterized in that** the application elements (34a-34e) are supplied with carrier liquid (T) via a circulation system (14) of the agricultural sprayer apparatus before the start of the feeding of the active substance into the carrier liquid (T).

3. Method according to any of the preceding claims,
**characterized in that** routing of the carrier liquid (T), which is present in the application line (30) at the start of the feeding of the active substance into the carrier liquid (T), back into the storage container (16) for the carrier liquid (T) is interrupted when a predetermined amount of spray liquid produced in the apparatus has been conveyed to the application elements (34a- 34e).

4. Method according to any of the preceding claims,
**characterized in that** an excess amount of conveyed carrier liquid (T) is routed back into the storage container (16) for the carrier liquid (T) via a discharge line (24) before reaching the infeed point (28) of the active substance (W) if the routing of the carrier liquid (T), which is present in the application line (30) at the start of the feeding of the active substance into the carrier liquid (T), back into a storage container (16) for the carrier liquid (T) is interrupted.

5. Agricultural sprayer apparatus, in particular a field sprayer, which has
- a direct infeed system (12), by means of which an active substance (W) can be fed into a carrier liquid (T) at at least one infeed point (28) of a line system of the agricultural sprayer apparatus in order to produce, inside the apparatus, a spray liquid to be applied; and
- a plurality of application elements (34a-34e), by means of which the spray liquid produced in the apparatus can be applied to an area agricultural land;
- a control device which is designed to cause the application elements (34a-34e) to initially be in a closed state at the start of feeding of the active substance into the carrier liquid (T), at least until the spray liquid produced in the apparatus is in contact with the application elements (34a-34e), and the application elements (34a-34e) are fluidically connected to a storage container (16) for the carrier liquid (T) via a return line (36), the control device being designed to cause the carrier liquid (T), which is present in the application line (30) at the start of the feeding of the active substance into the carrier liquid (T), to be at least partially routed back into a storage container (16) for the carrier liquid (T) via the return line (36),
**characterized by**
- a flow measuring device (32) which is designed to determine the flow rate of liquid through the application line (30) from the start of the feeding of the active substance into the carrier liquid (T); and/or
- a flow measuring device (38) which is designed to determine the flow rate of liquid through the return line (36) from the start of the feeding of the active substance into the carrier liquid (T);
the control device being designed to interrupt the routing of the carrier liquid (T), which is present in the application line (30) at the start of the feeding of the active substance into the carrier liquid (T), back into the storage container (16) for the carrier liquid (T) as soon as the determined flow rate of liquid through the application line (30) and/or the return line (36) reaches or exceeds a threshold value.

6. Agricultural sprayer apparatus according to claim 5,
**characterized in that** the infeed point (28) and the application elements (34a-34e) are fluidically connected by at least one application line (30), via which the spray liquid produced in the apparatus can be conveyed to the application elements (34a-34e).

7. Agricultural sprayer apparatus according to claim 5 or claim 6,
**characterized by** a circulation system (14) which has a liquid circuit which is fluidically connected to the application elements (34a-34e), the liquid circuit enabling the carrier liquid (T) to circulate.

8. Agricultural sprayer apparatus according to any of the preceding claims, **characterized in that** the control device is designed to interrupt routing of the carrier liquid (T), which is present in the application line (30) at the start of the feeding of the active substance into the carrier liquid (T), back into the storage container (16) for the carrier liquid (T) when a predetermined amount of spray liquid produced in the apparatus has been conveyed to the application elements (34a-34e).

9. Agricultural sprayer apparatus according to any of claims 5 to 8, **characterized by** a discharge line (24), by means of which an excess amount of conveyed carrier liquid (T) can be routed back into the storage container (16) for the carrier liquid (T) before reaching the infeed point (28) of the active substance (W).

## Revendications

1. Procédé permettant de faire fonctionner un appareil de pulvérisation agricole présentant un système d'injection directe (12), comportant les étapes consistant à :
- injecter une substance active (W) dans un liquide porteur (T) en au moins un point d'injection (28) d'un système de conduites de l'appareil de pulvérisation agricole pour la production interne à l'appareil d'un liquide de pulvérisation à épandre ; et
- transporter le liquide de pulvérisation produit à l'intérieur de l'appareil vers plusieurs éléments d'épandage (34a-34e) de l'appareil de pulvérisation agricole, à l'aide desquels le liquide de pulvérisation produit à l'intérieur de l'appareil peut être épandu sur une surface agricole utile ;
dans lequel un dispositif de commande de l'appareil de pulvérisation agricole fait en sorte qu'au début d'une injection de substance active dans le liquide porteur (T), les éléments d'épandage (34a-34e) se trouvent d'abord dans un état fermé au moins jusqu'à ce que le liquide de pulvérisation produit à l'intérieur de l'appareil soit appliqué sur les éléments d'épandage (34a-34e) et que le liquide de pulvérisation produit à l'intérieur de l'appareil soit transporté vers les éléments d'épandage (34a-34e) par l'intermédiaire d'au moins une conduite d'épandage (30) s'étendant entre le point d'injection (28) et les éléments d'épandage (34a-34e), dans lequel, au début de l'injection de substance active dans le liquide porteur (T), du liquide porteur (T) est présent dans la conduite d'épandage (30), et dans lequel le liquide porteur (T) présent dans la conduite d'épandage (30) au début de l'injection de substance active dans le liquide porteur (T) est renvoyé au moins partiellement dans un réservoir de stockage (16) pour le liquide porteur (T) par l'intermédiaire d'une conduite de retour (36),
dans lequel
pendant ce temps le liquide de pulvérisation produit à l'intérieur de l'appareil est transporté vers les éléments d'épandage (34a-34e) et dans lequel au moins l'une des étapes consistant à :
- déterminer le débit de liquide à travers la conduite d'épandage (30) à l'aide d'un dispositif de mesure de débit (32) à partir du début de l'injection de substance active dans le liquide porteur (T) ; et/ou
- déterminer le débit de liquide à travers la conduite de retour (36) à l'aide d'un dispositif de mesure de débit (38) à partir du début de l'injection de substance active dans le liquide porteur (T) ;
le procédé **caractérisé en ce que**
le renvoi du liquide porteur (T) présent dans la conduite d'épandage (30) au début de l'injection de substance active dans le liquide porteur (T) dans le réservoir de stockage (16) pour le liquide porteur (T) est interrompu dès que le débit déterminé de liquide à travers la conduite d'épandage (30) et/ou la conduite de retour (36) atteint ou dépasse une valeur limite.

2. Procédé selon la revendication 1,
**caractérisé en ce que** les éléments d'épandage (34a-34e) sont alimentés en liquide porteur (T) par l'intermédiaire d'un système de circulation (14) de l'appareil de pulvérisation agricole avant le début de l'injection de substance active dans le liquide porteur (T).

3. Procédé selon l'une des revendications précédentes,
**caractérisé en ce qu'**un retour du liquide porteur (T) présent dans la conduite d'épandage (30) au début de l'injection de substance active dans le liquide porteur (T) dans le réservoir de stockage (16) pour le liquide porteur (T) est interrompu lorsqu'une quantité prédéfinie de liquide de pulvérisation produit à l'intérieur de l'appareil a été transportée vers les éléments d'épandage (34a-34e).

4. Procédé selon l'une des revendications précédentes,
**caractérisé en ce qu'**une quantité excédentaire de liquide porteur (T) transporté est renvoyée dans le réservoir de stockage (16) pour le liquide porteur (T) par l'intermédiaire d'une conduite d'évacuation (24) avant d'atteindre le point d'injection (28) de la substance active (W), lorsque le renvoi du liquide porteur (T) présent dans la conduite d'épandage (30) au début de l'injection de substance active dans le liquide porteur (T) dans un réservoir de stockage (16) pour le liquide porteur (T) est interrompu.

5. Appareil de pulvérisation agricole, en particulier pulvérisateur agricole, comportant
- un système d'injection directe (12), à l'aide duquel, en au moins un point d'injection (28) d'un système de conduites de l'appareil de pulvérisation agricole, une substance active (W) peut être injectée dans un liquide porteur (T) pour la production interne à l'appareil d'un liquide de pulvérisation à épandre ; et
- plusieurs éléments d'épandage (34a-34e), à l'aide desquels le liquide de pulvérisation produit à l'intérieur de l'appareil peut être épandu sur une surface agricole utile ;
- un dispositif de commande qui est conçu pour faire en sorte qu'au début d'une injection de substance active dans le liquide porteur (T), les éléments d'épandage (34a-34e) se trouvent d'abord dans un état fermé au moins jusqu'à ce que le liquide de pulvérisation produit à l'intérieur de l'appareil soit appliqué sur les éléments d'épandage (34a-34e) et que les éléments d'épandage (34a-34e) soient reliés par l'intermédiaire d'une conduite de retour (36) de manière à conduire le fluide avec un réservoir de stockage (16) pour le liquide porteur (T), dans lequel le dispositif de commande est conçu pour faire en sorte que le liquide porteur (T) présent dans la conduite d'épandage (30) au début de l'injection de substance active dans le liquide porteur (T) soit renvoyé au moins partiellement dans un réservoir de stockage (16) pour le liquide porteur (T) par l'intermédiaire de la conduite de retour (36)
**caractérisé par**
- un dispositif de mesure de débit (32), qui est conçu pour déterminer le débit de liquide à travers la conduite d'épandage (30) à partir du début de l'injection de substance active dans le liquide porteur (T) ; et/ou
- un dispositif de mesure de débit (38), qui est conçu pour déterminer le débit de liquide à travers la conduite de retour (36) à partir du début de l'injection de substance active dans le liquide porteur (T) ;
dans lequel le dispositif de commande est conçu pour interrompre le renvoi du liquide porteur (T) présent dans la conduite d'épandage (30) au début de l'injection de substance active dans le liquide porteur (T) dans le réservoir de stockage (16) pour le liquide porteur (T) dès que le débit déterminé de liquide à travers la conduite d'épandage (30) et/ou la conduite de retour (36) atteint ou dépasse une valeur limite.

6. Appareil de pulvérisation agricole selon la revendication 5,
**caractérisé en ce que** le point d'injection (28) et les éléments d'épandage (34a-34e) sont reliés de manière conduire le fluide par l'intermédiaire d'au moins une conduite d'épandage (30), par l'intermédiaire de laquelle le liquide de pulvérisation produit à l'intérieur de l'appareil peut être transporté vers les éléments d'épandage (34a-34e).

7. Appareil de pulvérisation agricole selon la revendication 5 ou 6,
**caractérisé par** un système de circulation (14) qui présente un circuit de liquide relié de manière à conduire le fluide aux éléments d'épandage (34a-34e), dans lequel le circuit de liquide permet une circulation du liquide porteur (T).

8. Appareil de pulvérisation agricole selon l'une des revendications précédentes, **caractérisé en ce que** le dispositif de commande est conçu pour interrompre un retour du liquide porteur (T) présent dans la conduite d'épandage (30) au début de l'injection de substance active dans le liquide porteur (T) dans le réservoir de stockage (16) pour le liquide porteur (T), lorsqu'une quantité prédéfinie de liquide de pulvérisation produit à l'intérieur de l'appareil a été transportée vers les éléments d'épandage (34a-34e).

9. Appareil de pulvérisation agricole selon l'une des revendications 5 à 8, **caractérisé par** une conduite d'évacuation (24) à l'aide de laquelle une quantité excédentaire de liquide porteur (T) transporté peut être renvoyée dans le réservoir de stockage (16) pour le liquide porteur (T) avant d'atteindre le point d'injection (28) de la substance active (W).
